# EUROPÄISCHE PATENTSCHRIFT

(11) **EP 3 823 861 B1**
(45) Veröffentlichungstag und Bekanntmachung des Hinweises auf die Patenterteilung: **28.12.2022**
(21) Anmeldenummer: 19731899.1
(22) Anmeldetag: 11.06.2019
(51) Int. Cl.: B60R 16/02, F16L 3/10, F16L 3/26, H02G 3/04, H02G 3/32, B60R 13/00

(54) **MOTORRADVERKLEIDUNGSBAUTEIL UND MOTORRADBAUGRUPPE**
MOTORCYCLE TRIM COMPONENT AND MOTORCYCLE ASSEMBLY
COMPOSANT D'HABILLAGE DE MOTOCYCLETTE ET MODULE DE MOTOCYCLETTE

(30) Priorität: 18.07.2018 DE 102018211953
(43) Veröffentlichungstag der Anmeldung: 26.05.2021
(73) Patentinhaber: Bayerische Motoren Werke Aktiengesellschaft, 80809 München (DE)
(72) Erfinder: PAZULLA, Martin, 82515 Wolfratshausen (DE); KRYCH, Tim, 81825 München (DE)
(86) Internationale Anmeldenummer: PCT/EP2019/065188
(87) Internationale Veröffentlichungsnummer: WO 2020/015925

(56) Entgegenhaltungen:
- DE-A1-102008 023 241
- JP-A- 2003 072 623

## Beschreibung

Die vorliegende Erfindung betrifft eine Motorradbaugruppe mit einem Motorradverkleidungsbauteil.

Zur Führung der Bremsleitung sind bei Motorrädern üblicherweise separate Halter vorgesehen, die mit einer Karosserie verschraubt sind. Die Befestigung der Halter erfordert somit einen separaten Montageschritt, was sich nachteilig auf eine Gesamtmontagezeit auswirkt, die bei der Fertigung eines Motorrads benötigt wird. Zudem entstehen durch den Halter zusätzliche Kosten.

Die JP 2003072623 A offenbart ein Schutzblech für ein Motorrad, in dem eine Aufnahme für einen Bremsschlauch vorhanden ist. Die Aufnahme umfasst zwei Schlauchklemmen die einteilig am Schutzblech geformt sind. Der Bremsschlauch ist in der Aufnahme fixiert, wenn das Schutzblech an einem weiteren Bauteil befestigt ist.

Die DE 10 2008 023 241 A1 offenbart ein Verkleidungsbauteil für ein Fahrzeug, in dem eine Kabelhalterung ausgebildet ist. Die Kabelhalterung umfasst ein Deckelelement, das mittels eines Filmscharniers schwenkbar am Bodenelement 2 gelagert ist und zum Halten eines Kabels an einem Bodenelement verrasten kann.

Es ist somit eine Aufgabe der vorliegenden Erfindung, eine kostengünstige und schnell montierbare Führung für eine Bremsleitung bereitzustellen.

Diese Aufgabe wird erfindungsgemäß gelöst durch eine Motorradbaugruppe mit einem Motorradverkleidungsbauteil umfassend eine für die Aufnahme und Halterung eines Schlauches ausgebildete Leitungsführung, die einteilig mit dem Verkleidungsbauteil ausgebildet ist. Der Schlauch ist beispielsweise eine Bremsleitung. Die Leitungsführung umfasst mindestens einen Haltebügel, der mittels eines Filmscharniers an dem restlichen Verkleidungsbauteil gelagert ist und der ein im wesentlichen L-förmiges Profil hat und der zur Fixierung des Schlauches in eine Halteposition bewegbar ist. Ein Schlauch ist in der Leitungsführung aufgenommen. Zudem ist mindestens ein weiteres Fahrzeugbauteil vorgesehen, insbesondere ein Karosseriebauteil des Motorrads, das an das Verkleidungsbauteil angrenzt. Der Schlauch ist in einem Kanal des Motorradverkleidungsbauteils angeordnet. Der Haltebügel ist in einer montierten Position des Verkleidungsbauteils mittels eines Querstegs des L-Profils an dem angrenzenden Bauteil abgestützt und dadurch in einer Halteposition gehalten.

Mittels einer solchen Motorradbaugruppe kann die Bremsleitung entsprechend einem vorgesehenen Verlauf an dem Motorradverkleidungsbauteil geführt sein.

Durch die einteilige Ausbildung der Leitungsführung mit dem Motorradverkleidungsbauteil kann ein separater Halter entfallen, was wiederum zu Kostenersparnis führt. Zudem kann dadurch die Montage vereinfacht sein. Insbesondere muss kein zusätzlicher Halter gehandhabt und befestigt werden.

Durch den Haltebügel kann eine Montage des Schlauches am Motorradverkleidungsbauteil in besonders einfacher Weise erfolgen. Beispielsweise kann der Schlauch durch einfaches Umlegen des Haltebügels von dem Haltebügel an dem Motorradverkleidungsbauteil montiert werden.

Dass sich der Haltebügel an einem angrenzenden Bauteil abstützt, hat den Vorteil, dass keine zusätzlichen Befestigungsmittel, wie beispielsweise Schrauben oder Klemmen, benötigt werden, um den Haltebügel in seiner Halteposition zu halten. Insbesondere kann die Montage werkzeuglos erfolgen.

Durch das Filmscharnier ist der mindestens eine Haltebügel schwenkbar und gleichzeitig verliersicher an dem Motorradverkleidungsbauteil angeordnet. Ein Filmscharnier stellt zudem eine besonders kostengünstige Möglichkeit zur schwenkbaren Lagerung des Haltebügels an dem Motorradverkleidungsbauteil dar.

Durch die L-Form des Haltebügels kann folglich ein Schenkel des L-förmigen Haltebügels zum Verschließen des Kanals und ein weiterer Schenkel zum Abstützen des Haltebügels dienen. Auf diese Weise kann der Schlauch besonders zuverlässig im Kanal gehalten sein. Zudem ist sichergestellt, dass sich der Haltebügel in montiertem Zustand eines Motorrads nicht aus seiner Halteposition herausbewegen kann.

Beispielsweise ist das Motorradverkleidungsbauteil ein Kunststoffspritzgussteil, wobei der Haltebügel einteilig mit dem Motorradverkleidungsbauteil geformt ist.

Gemäß einer bevorzugen Ausführungsform ist der Kanal an dem Verkleidungsbauteil im Querschnitt U-förmiger geformt, wobei der Haltebügel an einem freien Längsrand des U-förmigen Kanals angeordnet ist und mittels des mindestens einen Filmscharniers relativ zum Kanal verschwenkbar ist, um den Kanal zu schließen. In den Kanal kann der Schlauch eingelegt werden, bevor der Haltebügel in seine Halteposition verschwenkt wird. Auf diese Weise ist der Schlauch sicher an dem Motorradverkleidungsbauteil fixiert. Des Weiteren kann durch die U-Form des Kanals dieser den Schlauch zumindest abschnittsweise umfangsseitig umgeben beziehungsweise abschirmen, sodass ein in dem Kanal verlaufender Schlauchabschnitt vor Beschädigung geschützt ist.

Der Kanal kann je nach Bedarf einen geradlinigen oder kurvenförmigen Verlauf haben.

Um eine Führung des Schlauches in dem Kanal weiter zu verbessern, können mindestens zwei Haltebügel an dem Kanal angeordnet sein, wobei die Haltebügel jeweils an entgegengesetzte Längsenden des Kanals angrenzen. Dadurch wird sichergestellt, dass der Schlauch nach abgeschlossener Montage entlang der gesamten Längsausdehnung des Kanals in dem Kanal verbleibt.

Gemäß einer Ausführungsform ist das Verkleidungsbauteil eine Hinterradabdeckung. Somit lässt sich die Leitungsführung in ein bereits vorhandenes Bauteil integrieren.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1 ein Motorradverkleidungsbauteil und
- Figur 2 eine erfindungsgemäße Motorradbaugruppe.

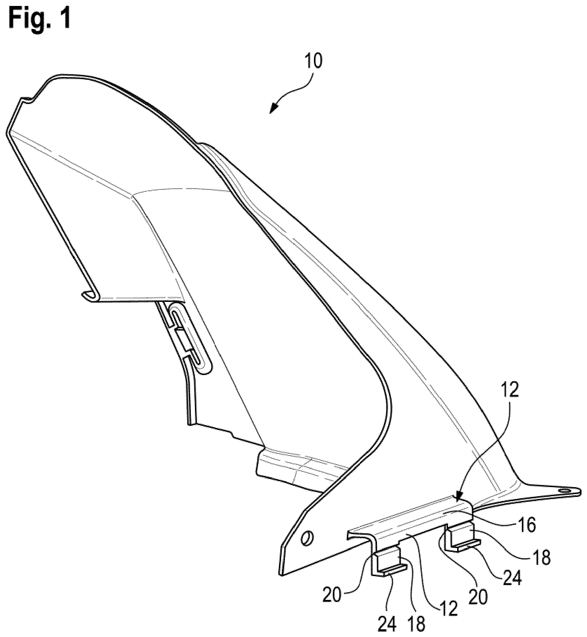

Figur 1 zeigt ein Motorradverkleidungsbauteil 10, insbesondere eine Hinterradabdeckung. Das Motorradverkleidungsbauteil ist vorzugsweise ein Kunststoffspritzgussbauteil.

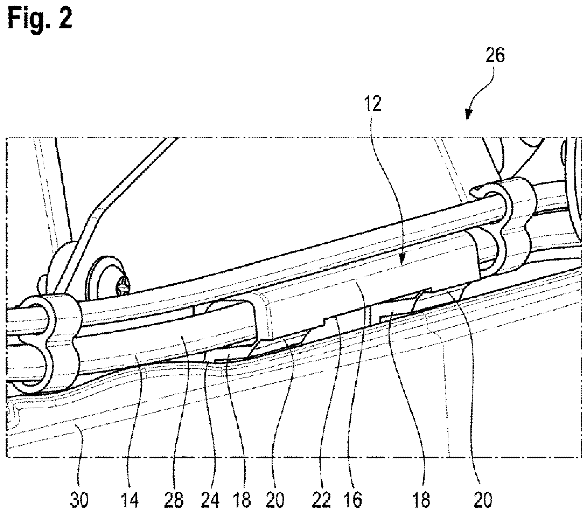

An dem Motorradverkleidungsbauteil 10 ist eine Leitungsführung 12 angeordnet, die einteilig mit dem Motorradverkleidungsbauteil 10 geformt ist. Die Leitungsführung 12 ist zur Aufnahme und Halterung eines in Figur 2 dargestellten Schlauches 14, insbesondere einer Bremsleitung, ausgebildet.

Wie in Figur 1 zu sehen ist, umfasst die Leitungsführung 12 einen im Querschnitt U-förmigen Kanal 16, in den ein Schlauch 14 eingelegt werden kann, und zwei Haltebügel 18.

Die Haltebügel 18 sind mittels eines Filmscharniers 20 an dem restlichen Motorradverkleidungsbauteil 10 befestigt und können von einer Montageposition, die in Figur 1 dargestellt ist, in eine Halteposition verschwenkt werden. In der Halteposition verschließen die Haltebügel 18 den Kanal 16 zumindest teilweise, um einen in dem Kanal 16 befindlichen Schlauch 14 zu fixieren.

In der dargestellten Ausführungsform sind die Haltebügel an einem freien Längsrand 22 des Kanals 16 angeordnet. Dies ist vorteilhaft hinsichtlich der Entformbarkeit des Motorradverkleidungsbauteils 10.

Um einen Schlauch 14 entlang der gesamten Länge des Kanals 16 in dem Kanal 16 zu halten, sind zwei an entgegengesetzte Längsenden des Kanals 16 angrenzende Haltebügel 18 vorgesehen. Bei einem Kanal 16 mit einer besonders großen Längsausdehnung kann zusätzlich mindestens ein Haltebügel 18 in der Mitte des Kanals 16 vorgesehen sein.

Der Haltebügel 18 hat ein im Wesentlichen L-förmiges Profil. Diese Form des Haltebügels 18 dient dazu, dass sich der Haltebügel 18 in einer montierten Position des Verkleidungsbauteils 10 mittels eines Querstegs 24 des L-Profils an einem angrenzenden Bauteil abstützen kann. Dies wird nachfolgend in Zusammenhang mit Figur 2 genauer erläutert. In einem montierten Zustand erstreckt sich der Quersteg 24 ausgehend von dem Haltebügel 18 in eine Richtung weg von dem Kanal 16.

Figur 2 zeigt eine erfindungsgemäße Motorradbaugruppe 26 mit einem Motorradverkleidungsbauteil 10, insbesondere mit dem in Zusammenhang mit Figur 1 beschriebenen erfindungsgemäßen Motorradverkleidungsbauteil 10.

Zudem umfasst die Motorradbaugruppe 26 einen Schlauch 14, insbesondere eine Bremsleitung 28, wobei die Bremsleitung 28 in der Leitungsführung 12 aufgenommen ist. Genauer gesagt ist die Bremsleitung 28 in dem Kanal 16 des Motorradverkleidungsbauteils 10 angeordnet.

Des Weiteren ist mindestens ein weiteres Fahrzeugbauteil 30 vorgesehen, insbesondere ein Karosseriebauteil des Motorrads.

Die beiden Haltebügel 18 am Motorradverkleidungsbauteil 10 sind in einer Halteposition angeordnet und durch das mindestens eine weitere Fahrzeugbauteil 30 in der Halteposition gehalten. Dabei stützt sich der Quersteg 24 des L-förmigen Haltebügels 18 am Rand des unmittelbar angrenzenden Fahrzeugbauteil 30 ab.

## Patentansprüche

1. Motorradbaugruppe (26) mit einem Motorradverkleidungsbauteil (10) umfassend eine für die Aufnahme und Halterung eines Schlauches (14) ausgebildete Leitungsführung (12), die einteilig mit dem Verkleidungsbauteil (10) ausgebildet ist, wobei die Leitungsführung (12) mindestens einen Haltebügel (18) umfasst, der mittels eines Filmscharniers (20) an dem restlichen Verkleidungsbauteil (10) gelagert ist, der ein im wesentlichen L-förmiges Profil hat und der zur Fixierung des Schlauches (14) in eine Halteposition bewegbar ist, wobei ein Schlauch (14) in der Leitungsführung (12) aufgenommen ist, mindestens ein weiteres Fahrzeugbauteil (30) vorgesehen ist, das an das Verkleidungsbauteil angrenzt, und wobei der Schlauch (14) in einem Kanal (16) des Motorradverkleidungsbauteils (10) angeordnet ist und sich der Haltebügel (18) in einer montierten Position des Verkleidungsbauteils (10) mittels eines Querstegs (24) des L-Profils an dem angrenzenden Bauteil (30) abstützt und dadurch in einer Halteposition gehalten ist.

2. Motorradbaugruppe (26) nach Anspruch 1, **dadurch gekennzeichnet, dass** der Kanal (16) im Querschnitt U-förmig geformt ist, wobei der Haltebügel (18) an einem freien Längsrand des U-förmigen Kanals (16) angeordnet ist und mittels des mindestens einen Filmscharniers (20) relativ zum Kanal (16) verschwenkbar ist, um den Kanal (16) zu schließen.

3. Motorradbaugruppe (26) nach Anspruch 2, **dadurch gekennzeichnet, dass** mindestens zwei Haltebügel (18) an dem Kanal (16) angeordnet sind, wobei die Haltebügel (18) jeweils an entgegengesetzte Längsenden des Kanals (16) angrenzen.

4. Motorradbaugruppe (26) nach einem der vorhergehenden Ansprüche, **dadurch gekennzeichnet, dass** das Verkleidungsbauteil (10) eine Hinterradabdeckung ist.

5. Motorradbaugruppe (26) gemäß einem der vorhergehenden Ansprüche, **dadurch gekennzeichnet, dass** das weitere Fahrzeugbauteil (30) ein Karosseriebauteil des Motorrads ist.

## Claims

1. Motorcycle assembly (26) having a motorcycle trim component (10), comprising a line duct (12) which is designed for receiving and holding a hose (14) and which is formed integrally with the trim component (10), wherein the line duct (12) comprises at least one holding clamp (18) which is mounted on the rest of the trim component (10) by means of a film hinge (20) and which has a substantially L-shaped profile and which is movable into a holding position in order to secure the hose (14), wherein a hose (14) is accommodated in the line duct (12), at least one further vehicle component (30) which is adjacent to the trim component is provided, and wherein the hose (14) is arranged in a channel (16) of the motorcycle trim component (10), and the holding clamp (18) is supported on the adjacent component (30) by means of a transverse web (24) of the L-profile in a mounted position of the trim component (10) and is thereby held in a holding position.

2. Motorcycle assembly (26) according to Claim 1, **characterized in that** the channel (16) is U-shaped in cross-section, wherein the holding clamp (18) is arranged at a free longitudinal edge of the U-shaped channel (16) and is pivotable relative to the channel (16) by means of the at least one film hinge (20), in order to close the channel (16).

3. Motorcycle assembly (26) according to Claim 2, **characterized in that** at least two holding clamps (18) are arranged on the channel (16), wherein the holding clamps (18) are in each case adjacent to opposite longitudinal ends of the channel (16).

4. Motorcycle assembly (26) according to one of the preceding claims, **characterized in that** the trim component (10) is a rear wheel cover.

5. Motorcycle assembly (26) according to one of the preceding claims, **characterized in that** the further vehicle component (30) is a body component of the motorcycle.

## Revendications

1. Sous-ensemble de motocyclette (26) pourvu d'un composant d'habillage de motocyclette (10), comprenant un chemin de câble (12) réalisé pour recevoir et maintenir un tuyau flexible (14) et qui est réalisé d'un seul tenant avec le composant d'habillage (10), dans lequel le chemin de câble (12) comprend au moins un étrier de maintien (18) qui est monté au moyen d'une charnière à film (20) sur le reste du composant d'habillage (10), qui présente un profilé substantiellement en forme de L, et qui peut être déplacé dans une position de maintien pour la fixation du tuyau flexible (14), dans lequel un tuyau flexible (14) est reçu dans le chemin de câble (12), au moins un autre composant de véhicule (30) est prévu qui est adjacent au composant d'habillage, et dans lequel le tuyau flexible (14) est disposé dans un canal (16) du composant d'habillage de motocyclette (10) et l'étrier de maintien (18) dans une position montée du composant d'habillage (10) prend appui au moyen d'une traverse (24) du profilé en L sur le composant adjacent (30) et est ainsi maintenu dans une position de maintien.

2. Sous-ensemble de motocyclette (26) selon la revendication 1, **caractérisé en ce que** le canal (16) est formé en forme de U en section transversale, l'étrier de maintien (18) étant disposé sur un bord longitudinal libre du canal en forme de U (16) et étant pivotant au moyen de ladite au moins une charnière à film (20) par rapport au canal (16) afin de fermer le canal (16).

3. Sous-ensemble de motocyclette (26) selon la revendication 2, **caractérisé en ce qu'**au moins deux étriers de maintien (18) sont disposés sur le canal (16), les étriers de maintien (18) étant respectivement adjacents à des extrémités longitudinales opposées du canal (16).

4. Sous-ensemble de motocyclette (26) selon l'une quelconque des revendications précédentes, **caractérisé en ce que** le composant d'habillage (10) est un gardeboue.

5. Sous-ensemble de motocyclette (26) selon l'une quelconque des revendications précédentes, **caractérisé en ce que** l'autre composant de véhicule (30) est un composant de carrosserie de la motocyclette.
